# EUROPEAN PATENT SPECIFICATION

(11) **EP 3 587 205 B1**
(45) Date of publication and mention of the grant of the patent: **31.05.2023**
(21) Application number: 18757665.7
(22) Date of filing: 05.02.2018
(51) Int. Cl.: B60W 10/26, B60K 6/48, B60L 3/00, B60W 10/06, B60W 10/08, B60W 20/12, B60W 20/13, B60W 30/06, G08G 1/16, B62D 15/02

(54) **PARKING CONTROL DEVICE**
PARKSTEUERUNGSVORRICHTUNG
DISPOSITIF DE COMMANDE DE STATIONNEMENT

(30) Priority: 21.02.2017 JP 2017029968
(43) Date of publication of application: 01.01.2020
(73) Proprietor: Hitachi Astemo, Ltd., Hitachinaka-shi, Ibaraki 312-8503 (JP)
(72) Inventor: KOGURE, Yusuke, Hitachinaka-shi, Ibaraki 312-8503 (JP); SEIMIYA, Masashi, Hitachinaka-shi, Ibaraki 312-8503 (JP); YOSHIDA, Yoshiyuki, Hitachinaka-shi, Ibaraki 312-8503 (JP)
(74) Representative: Mewburn Ellis LLP
(86) International application number: PCT/JP2018/003743
(87) International publication number: WO 2018/155143

(56) References cited:
- DE-A1-102014 220 123
- JP-A- 2004 147 460
- JP-A- 2004 352 000
- JP-A- 2005 080 324
- JP-A- 2008 082 944
- JP-A- 2009 042 095
- JP-A- 2009 298 278
- JP-A- 2011 135 655
- JP-A- 2011 135 655
- KR-A- 20140 135 359

## Description

### Technical Field

The present invention relates to a parking control device.

### Background Art

Recently, along with a spread of a hybrid vehicle having both of an engine and a motor as driving sources, development of an automated driving technology to assist parking of a vehicle is in progress.

As the above-described technology to assist parking, for example, a technology of comparing, before execution of parking operation, power requested to a motor and power that can be output by the motor until a parking assist is over and determining whether the parking assist is possible, and of executing the parking assist only in a case where determination indicating the possible is made is disclosed with respect to a hybrid vehicle (see, for example, JP 2011-135655 A).

Such a technology is superior in a point that it is possible to predict whether a parking assist is possible before the assist is started, and to previously control failure in continuance of the assist in the middle of parking.

KR 2014 0135359 A discloses an apparatus and a method for controlling auto parking.

### Summary of Invention

### Technical Problem

Here, since a hybrid vehicle includes an engine and a motor, a method of completing parking by driving the vehicle with the motor by charging a weak battery by power generation by running of the engine during a parking assist, or driving the vehicle by the engine is considered.

However, by such a method, a remaining amount of the battery constantly varies according to power generation by the engine and electric power consumption by the motor, whereby starting and stopping of the engine are repeated. Thus, in a vehicle using the above method, there is a tendency that a decrease in comfort due to noise or vibration during running of an engine or a decrease in driving performance due to a torque variation generated along with staring or stopping of the engine is caused.

The present invention is provided in view of the above condition, and is to provide a parking control device that can improve driving performance during a parking operation execution period of a hybrid vehicle.

### Solution to Problem

The present invention relates to:
(1) a parking control device that controls parking of a hybrid vehicle that can execute engine travelling in which an engine as an internal-combustion engine is a driving source, battery traveling in which a motor using a battery is a driving source, and engine charging to charge the battery by the engine, the device including:
   a necessary electric energy calculation unit configured to calculate electric energy necessary for executing parking of the hybrid vehicle;
   an electric energy comparison unit configured to compare the necessary electric energy calculated by the necessary electric energy calculation unit and usable electric energy remaining in the battery before the parking is started; and
   a control unit configured to control operation of the engine travelling, the battery traveling, and the engine charging based on the comparison between the necessary electric energy and the usable electric energy by the electric energy comparison unit,
   wherein the control unit is configured to continuously perform the battery traveling, or the battery traveling and the engine travelling and configured to permit the engine charging during a parking operation execution period to execute the parking of the hybrid vehicle in a case where the usable electric energy is lower than the necessary electric energy, and
   is configured to continuously perform the battery traveling without continuously performing the engine travelling, and configured to permit the engine charging during the parking operation execution period to execute the parking of the hybrid vehicle in a case where the usable electric energy is equal to or higher than the necessary electric energy,
(2) the parking control device according to (1), wherein the electric energy necessary for executing the parking includes auxiliary device electric energy consumed during the parking operation execution period, and
(3) the parking control device according to any one of (1) to (2), wherein the electric energy necessary for executing the parking includes what is due to a road grade and/or a road bump in a traveling path where the hybrid vehicle travels during the parking operation execution period.

Note that in the present description, a "battery" is a rechargeable/dischargeable secondary battery connected to a motor generator of a hybrid vehicle, and means what becomes power to let the vehicle travel. "Engine travelling" means a traveling action of a vehicle in which an engine as an internal-combustion engine is a driving source. "Battery traveling" means a traveling action of a vehicle in which a motor by power feeding from a battery is a driving source. "Engine charging" means an action of charging the battery with electricity acquired by power generation using power of an engine. Also, "continuous" means continuance throughout the parking operation execution period. Also, an "auxiliary device" means a device that is used for a purpose other than traveling of a vehicle and that is actuated by electric power, and "auxiliary device electric energy" means electric energy used to actuate the auxiliary device.

### Advantageous Effects of Invention

Since starting and/or stopping of an engine for engine travelling is not performed during a parking operation execution period of a hybrid vehicle, the present invention can improve driving performance during the period.

### Brief Description of Drawings

[FIG. 1] FIG. 1 is a schematic view illustrating first and second embodiments of a parking control device of the present invention.
[FIG. 2] FIG. 2 is a flowchart illustrating a processing flow of the first embodiment not part of the present invention.
[FIG. 3] FIG. 3 is a flowchart illustrating a processing flow of the second embodiment of the present invention.

### Description of Embodiments

Embodiments of a parking control device of the present invention will be described. In the present description, "comfort" means a degree of noise or vibration of a vehicle generated along with actuation of an engine, and it is indicated that the comfort becomes higher as the noise or vibration becomes less. Also, "driving performance" means a degree of acceleration/deceleration of a vehicle due to a variation in engine torque generated in association with starting and/or stopping of an engine in engine travelling, and it is indicated that driving performance becomes higher as the acceleration/deceleration becomes less.

In the following, first and second embodiments of a parking control device of the present invention will be described with reference to the drawings. However, the present invention is not limited to embodiments illustrated in the drawings.

### [First embodiment]

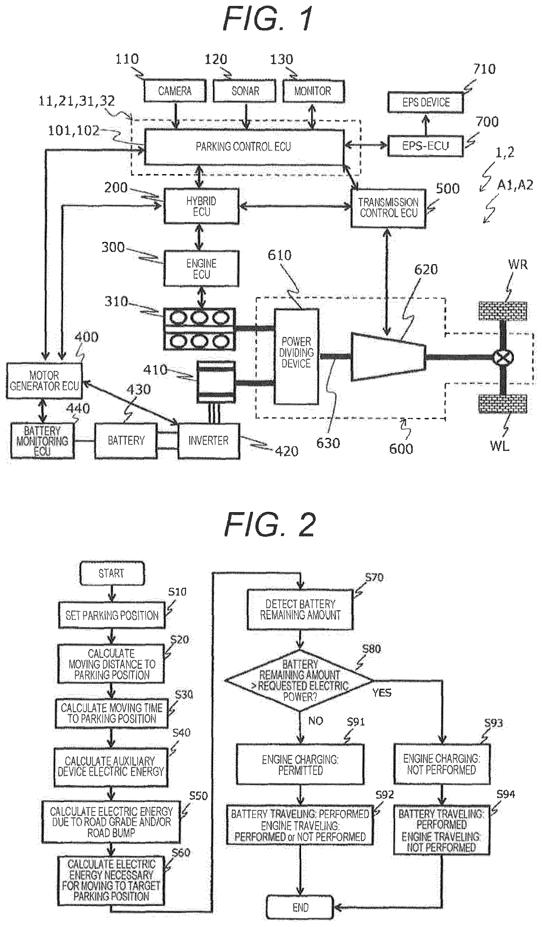

FIG. 1 is a schematic view illustrating the first embodiment of the parking control device of the present invention. As illustrated in FIG. 1, the parking control device A1 includes a necessary electric energy calculation unit 11, an electric energy comparison unit 21, and a control unit 31.

The necessary electric energy calculation unit 11 calculates electric energy that is necessary for executing parking of a hybrid vehicle 1 and that is to be input into the vehicle 1. This necessary electric energy calculation unit 11 mainly includes a parking control electronic control unit (ECU) 101 (described later). Here, the electric energy necessary for executing parking preferably includes auxiliary device electric energy consumed during a parking operation execution period. That is, it is preferred that the electric energy necessary for executing parking is a combination of electric energy necessary for driving to move the vehicle 1 to a target parking position, and auxiliary device electric energy calculated in Step 40. As an auxiliary device, for example, there is an electric air-conditioner, a light, an audio device, or the like. Accordingly, it is possible to previously prevent unexpected running out of a battery, which is associated with electric power use by an auxiliary device, in consideration of an actual condition such as running of an electric air-conditioner or a light.

Also, the above-described electric energy necessary for executing parking preferably includes what is due to a road grade and/or a road bump in a traveling path where the hybrid vehicle 1 travels during the parking operation execution period.

For example, it is possible to calculate electric energy due to each of a road grade and/or a road bump, after the road grade or the road bump is detected by utilization of information of the above-described camera 110 or sonar 120, information of an acceleration sensor (not illustrated), or the like, by calculating time-series electric power in a traveling path by using the detected road grade or road bump, car weight, or the like and integrating this across the whole traveling path. Thus, it is possible to calculate the electric energy necessary for executing parking by adding up the electric energy due to the road grade and/or the road bump and electric energy of when it is assumed that the traveling path is even and flat. Note that a known technology can be employed for the above-described detection of a road grade or a road bump and calculation of electric energy associated with this.

In such a manner, since the electric energy necessary for executing parking includes what is due to a road grade and/or a road bump in a traveling path where the hybrid vehicle 1 travels during the parking operation execution period, it is possible to more accurately calculate electric energy, and to further improve driving performance by accurate control of engine travelling, battery traveling, and engine charging.

The electric energy comparison unit 21 compares the necessary electric energy calculated by the above-described necessary electric energy calculation unit 11, and usable electric energy remaining in the battery before parking is started (hereinafter, also referred to as "battery remaining amount"). This electric energy comparison unit 21 mainly includes a parking control ECU 101. As a lower limit value of electric energy in a battery in calculation of the battery remaining amount (reference value to determine battery remaining amount is "0"), electric energy at a lower limit voltage at which over discharge is not generated, or electric energy used up to a voltage equal to or lower than the lower limit voltage (low voltage at which over discharge is generated) can be employed. However, in terms of battery protection, the electric energy at the lower limit voltage is preferred.

The control unit 31 controls operation of engine travelling, battery traveling, and engine charging based on the comparison between the necessary electric energy and the usable electric energy by the electric energy comparison unit 21. This control unit 31 performs control in such a manner as to select any of the battery traveling, and the battery traveling and the engine travelling, to continuously perform this during the parking operation execution period of executing parking of the hybrid vehicle 1, and to permit the engine charging in a case where the usable electric energy is lower than the necessary electric energy, and performs control in such a manner as to continuously perform the battery traveling during the parking operation execution period of executing the parking of the hybrid vehicle, and not to perform any of the engine travelling and the engine charging continuously during the period in a case where the usable electric energy is equal to or higher than the necessary electric energy.

The control unit 31 mainly includes the parking control ECU 101. Note that execution of the engine charging in the above-described parking operation execution period may be performed intermittently during the parking operation execution period, but is preferably performed continuously in terms of controlling on/off of noise or vibration associated with starting and/or stopping of an engine 310.

Next, a hardware configuration of the parking control device A1 will be described with reference to FIG. 1. As illustrated in FIG. 1, the parking control device A1 schematically includes an engine 310, a motor generator 410, a power transmission device 600, a battery 430, a motor generator ECU 400, a hybrid ECU 200, a parking control ECU 101, and an EPS device 710.

The engine 310 is an internal-combustion engine to output mechanical power to the outside through an output shaft 630. Operation of this engine 310 is controlled by an electronic control unit for an engine (hereinafter, also referred to as "engine ECU") 300. Note that the engine ECU 300 adjusts magnitude of power output from the engine 310 (engine output torque) by controlling a fuel injection amount, fuel injection time, ignition time, or the like of the engine 310 and starts the engine 310 by controlling a stator motor (not illustrated).

The motor generator 410 has a function as a motor (electric motor) to convert electric power supplied from the battery 430 (described later) into mechanical power (motor output torque) and to perform an output thereof from the output shaft 630, and a function as a generator (electrical generator) to convert mechanical power input to the output shaft 630 into electric power and to perform collection thereof.

More specifically, when functioning as the electric motor, this motor generator 410 outputs power (motor output torque from output shaft) by the electric power from the battery 430, and makes the hybrid vehicle 1 travel by rotating drive wheels WL and WR by this power through a multistage transmission 620. On the one hand, in functioning as the electrical generator, mechanical power from the drive wheels WL and WR which power is input through the multistage transmission 620 and a power dividing device 610, or mechanical power from the engine 310 which power is input through the power dividing device 610 are input, and this input is converted into AC power. Note that operation of the motor generator 410 is controlled by an electronic control unit for the motor generator 410 (hereinafter, also referred to as "motor generator ECU") 400.

The power transmission device 600 transmits the output from the engine 310 and the motor generator 410 to a side of the drive wheels WL and WR. This power transmission device 600 schematically includes the power dividing device 610 and the multistage transmission 620, and these are coupled by the output shaft 630. The power dividing device 610 distributes the output of the engine 310 to the motor generator 410 and the multistage transmission 620. The multistage transmission 620 converts a mode (torque, or rotation speed and/or rotational direction) of power input from one output shaft 630 and performs an output thereof to the output shaft 630.

The battery 430 accumulates electric power to be fed to the motor generator 410. This battery 430 outputs the accumulated electric power as DC power in power feeding. This is converted into AC power by an inverter 420 and supplied to the motor generator 410. On the one hand, AC power from the motor generator 410 is input as DC power through the inverter 420 and this is accumulated in charging. Note that a battery monitoring ECU 440 to detect a state of charge (SOC) and a temperature of the battery 430 is connected to the battery 430.

The motor generator ECU 400 receives information such as the state of charge or the temperature of the battery 430 detected by the battery monitoring ECU 440, and determines whether it is necessary to charge the battery 430 based on this. Also, the motor generator ECU 400 receives information such as a state quantity, which includes temperature, of the inverter 420 or a control command, and controls the inverter 420 based on this.

The hybrid ECU 200 is an electronic control unit to integrally control operation of a whole vehicle of the hybrid vehicle 1. This hybrid ECU 200 receives, from the engine ECU 300 and the motor generator ECU 400, information such as a detection signal from various sensors or a control command, transmits a control command to the engine ECU 300 and the motor generator ECU 400 based on a driving request from a driver, information of a state of charge of the battery 430, information of a vehicle traveling state, or the like, and adjusts a distribution of an engine travelling mode and a battery traveling mode.

When controlling parking of the hybrid vehicle 1, the parking control ECU 101 calculates the necessary electric energy, compares this electric energy and usable electric energy, and controls operation of engine travelling, battery traveling, and engine charging according to the above-described control contents of the control unit 31 based on the comparison between the necessary electric energy and the usable electric energy.

More specifically, this parking control ECU 101 receives information of the motor generator ECU 400, the camera 110 (described later), or the like, makes the motor generator 410, or the motor generator 410 and the engine 310 output driving force by transmitting a driving request to the hybrid ECU 200 based on the driving request from the driver, the information of a state of charge of the battery 430, or the like, and shifts gears of the multistage transmission 620 by transmitting a gear-shift request to a transmission control ECU 500, whereby the hybrid vehicle 1 is made to travel toward a target parking position.

This parking control ECU 101 may make the hybrid vehicle 1 travel in such a manner that a driver can control vehicle speed only by button operation in parking to a target parking position. Accordingly, since it is possible to control vehicle speed only by button operation without braking operation or the like, an operation burden on the driver can be reduced. Also, the parking control ECU 101 transmits a signal related to a steering angle, or the like to the EPS device 710 (described later) in such a manner that the hybrid vehicle 1 can be parked in a target parking position (such as inside of parking frame of vehicle).

Here, to the parking control ECU 101, the camera 110, the sonar 120, and the monitor 130 are connected. The camera 110 at least images a rear side of the hybrid vehicle 1 and transmits acquired image data to the parking control ECU 101. The sonar 120 at least measures the periphery of the hybrid vehicle 1 and transmits acquired data to the parking control ECU 101. The monitor 130 is arranged in a vehicle interior and displays the image imaged by the camera 110, the information detected by the sonar 120, or the like. Also, this monitor 130 is electrically connected to the parking control ECU 101 and transmits/receives information. As the monitor 130, for example, a monitor in a car navigation system, or the like may be shared.

The above-described parking control ECU 101 performs parking control based on an instruction by the driver. As the above instruction, for example, there is an instruction by operation on a button or the like provided in the vehicle interior, an instruction by operation on a touch panel in a case where the monitor 130 is a touch panel type, or the like.

An electric power steering (EPS) device 710 assists steering operation by making assist torque to assist steering force of a driver act on a steering shaft (not illustrated). More specifically, the EPS device 710 includes a motor (not illustrated) to make torque of arbitrary magnitude act on the steering shaft. With this, even in a case where steering operation is not performed by the driver, it is possible to make the torque act on the steering shaft and to steer a steering wheel.

Here, the EPS device 710 is connected to an EPS-ECU 700, and this EPS-ECU 700 controls output torque and a rotational position of the motor of the EPS device 710 in such a manner that a steering angle of the steering wheel becomes a target steering angle set based on a target path. Note that the EPS-ECU 700 is connected to the hybrid ECU 200 through the parking control ECU 101, and information such as a control command is transmitted to/received from the hybrid ECU 200.

Next, a parking method performed by utilization of the parking control device A1 will be described with reference to FIG. 2. FIG. 2 is a flowchart illustrating a processing flow of the first embodiment. When operation to instruct execution of parking control is performed by a driver (or substitute system), the parking control device A1 first performs setting of a parking position (Step S10). This setting of a parking position is performed by designation of a parking position targeted by the driver (or substitute system) (hereinafter, also referred to as "target parking position") on an image displayed on the monitor 130 by imaging by the camera 110 and/or measuring by the sonar 120.

In the method of designating a parking position, for example, an image imaged by the camera 110 and a parking frame to designate a target parking position are designated in a superimposed manner on the monitor 130, and the driver (or substitute system) performs operation of confirming an intended parking position, whereby the target parking position is set. Note that an initial display position (candidate position) of the parking frame may be automatically set by the parking control device A1. Also, it may be possible to move or rotate the parking frame on the image by operation by the driver (or substitute system).

Next, the parking control ECU 101 calculates a target steering angle to make the hybrid vehicle 1 travel along a target path from a current position of the vehicle to the target parking position set in Step S10, and calculates a moving distance based on this (Step S20).

Next, a target vehicle speed of when the hybrid vehicle 1 is moved to the target parking position by motor output torque of the motor generator 410 is calculated, and time necessary for moving to the target parking position (this time is also referred to as "parking operation execution period") is calculated based on this target vehicle speed, and the moving distance calculated in Step S20 (Step S30).

Next, auxiliary device electric energy consumed during the parking operation execution period is calculated by utilization of a running state of an auxiliary device, and the parking operation execution period calculated in Step S30 (Step S40).

Next, time-series electric power in the traveling path is calculated by utilization of a road grade and a road bump detected by utilization of the camera 110 or the like, car weight, or the like, and electric energy due to the road grade and/or the road bump in the traveling path is calculated by utilization of this (Step S50).

Next, the parking control ECU 101 calculates electric energy necessary for executing parking of the vehicle 1 (electric energy necessary to move vehicle 1 to target parking position) (Step S60). In the present embodiment, the above necessary electric energy includes the auxiliary device electric energy consumed during the parking operation execution period, and the electric energy due to the road grade or the like. A combination of these is the electric energy necessary for executing parking of the hybrid vehicle 1.

Next, the parking control ECU 101 acquires information of a state of charge (SOC) of the battery 430 from the motor generator ECU 400, and detects usable electric energy remaining in the battery 430 (Step S70).

Next, the necessary electric energy calculated by the necessary electric energy calculation unit 11 and the usable electric energy remaining in the battery 430 before parking is started are compared. More specifically, the parking control ECU 101 determines whether the battery remaining amount detected in Step S70 is lower than the necessary electric energy (Step S80).

In a case where the parking control ECU 101 determines in Step S80 that the usable electric energy is lower than the necessary electric energy, the parking control ECU 101 gives an instruction to the engine 310 through the hybrid ECU 200 and the engine ECU 300 in such a manner as to permit engine charging by running of the engine 310 (Step S91), to continuously perform battery traveling (with battery traveling and without engine travelling) or to continuously perform both of the battery traveling and the engine travelling (Step S92), and to guide the vehicle to the target parking position during the parking operation execution period.

On the one hand, when the parking control ECU 101 determines in Step S80 that the usable electric energy is equal to or higher than the necessary electric energy, the parking control ECU 101 does not perform the engine charging (Step S93) and continuously performs the battery traveling (with battery traveling and without engine travelling) (Step S94) during the parking operation execution period.

Note that as described above, in a case where the parking control ECU 101 permits the engine charging during the parking operation execution period, the engine 310 may be started and/or stopped for charging in a part of the parking operation execution period. However, in terms of controlling discomfort felt by a passenger due to sudden starting or stopping of the engine 310, it is preferred to continuously perform the engine charging during the parking operation execution period.

Next, when the vehicle reaches the target parking position by the above-described parking operation, a flow according to the present parking method is ended.

As described above, in the parking control device A1, the control unit 31 constantly performs the battery traveling, or the battery traveling and the engine travelling and permits the engine charging during the parking operation execution period to execute parking of the hybrid vehicle 1 in a case where the usable electric energy is lower than the necessary electric energy, and continuously performs the battery traveling and does not continuously perform the engine travelling and the engine charging during the parking operation execution period to execute parking of the hybrid vehicle 1 in a case where the usable electric energy is equal to or higher than the necessary electric energy. Since there is no starting and/or stopping of the engine 310 for the engine travelling during the parking operation execution period of the hybrid vehicle 1, it is possible to improve driving performance in the period.

### [Second embodiment]

FIG. 1 is a schematic view illustrating the second embodiment of the parking control device of the present invention. As illustrated in FIG. 1, the parking control device A2 includes a necessary electric energy calculation unit 11, an electric energy comparison unit 21, and a control unit 32. In the parking control device A2, the control unit 32 is different from the control unit 31 of the parking control device A1 of the first embodiment. Note that the necessary electric energy calculation unit 11 and the electric energy comparison unit 21 have a configuration identical to that of the first embodiment. Thus, the same sign is assigned to identical parts and a detailed description thereof is omitted.

The control unit 32 controls operation of engine travelling, battery traveling, and engine charging based on comparison between necessary electric energy and usable electric energy by the electric energy comparison unit 21. This control unit 32 continuously performs battery traveling, or the battery traveling and engine travelling, and permits engine charging during a parking operation execution period to execute parking of a hybrid vehicle 2 in a case where the usable electric energy is lower than the necessary electric energy, and continuously performs the battery traveling without continuously performing the engine travelling, and permits the engine charging during the parking operation execution period to execute parking of the hybrid vehicle 2 in a case where the usable electric energy is equal to or higher than the necessary electric energy. This control unit 32 mainly includes a parking control ECU 102.

As illustrated in FIG. 1, the parking control device A2 schematically includes an engine 310, a motor generator 410, a power transmission device 600, a battery 430, a motor generator ECU 400, a hybrid ECU 200, a parking control ECU 102, and an EPS device 710. Note that the parking control device A2 has a configuration similar to that of the first embodiment other than the parking control ECU 102 to execute a function of the control unit 32. Thus, the description of the first embodiment is incorporated with respect to the configuration other than the parking control ECU 102, and a description thereof is omitted here.

When controlling parking of the hybrid vehicle 2, the parking control ECU 102 calculates the necessary electric energy, compares this electric energy with usable electric energy, and controls operation of the engine travelling, the battery traveling, and the engine charging according to the above-described control contents of the control unit 32 based on the comparison between the necessary electric energy and the usable electric energy.

More specifically, this parking control ECU 102 receives information of the motor generator ECU 400, the camera 110 described above, or the like, makes the motor generator 410, or the motor generator 410 and the engine 310 output driving force by transmitting a driving request to the hybrid ECU 200 based on a driving request from a driver, information of a state of charge of the battery 430, or the like, and shifts gears of a multistage transmission 620 by transmitting a gear-shift request to a transmission control ECU 500, whereby the hybrid vehicle 2 is made to travel toward a target parking position. Also, the parking control ECU 102 transmits a signal related to a steering angle, or the like to the EPS device 710 in such a manner that the hybrid vehicle 2 can be parked in a target parking position (such as inside of parking frame of vehicle).

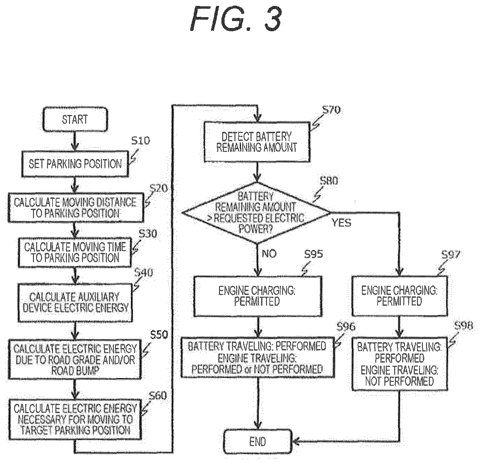

Next, a parking method performed by utilization of the parking control device A2 will be described with reference to FIG. 3. FIG. 3 is a flowchart illustrating a processing flow of the second embodiment of the present invention. Note that since processing up to comparison between necessary electric energy and usable electric energy is similar to Step S10 to Step S80 described above in the first embodiment, the description of the first embodiment is incorporated and a description thereof is omitted here.

After execution of Step S80 in the present embodiment, in a case where the parking control ECU 102 determines in Step S80 that usable electric energy is lower than necessary electric energy, the parking control ECU 102 permits engine charging by running of the engine 310 before execution of parking operation (Step S95), continuously performs the battery traveling (with battery traveling and without engine travelling) or continuously performs both of the battery traveling and the engine travelling (Step S96), and gives an instruction to the engine 310 through the hybrid ECU 200 and the engine ECU 300 in such a manner as to guide the vehicle toward a target parking position during a parking operation execution period.

On the one hand, in a case where the parking control ECU 102 determines in Step S80 that the usable electric energy is equal to or higher than the necessary electric energy, the parking control ECU 102 permits the engine charging by running of the engine (Step S97) and continuously performs the battery traveling (with battery traveling and without engine travelling) (Step S98) during the parking operation execution period.

In such a manner, the engine charging is permitted even in a case where the usable electric energy is equal to or higher than the necessary electric energy since there is a case where engine charging to a battery is started before a battery remaining amount becomes "0" (such as case where engine charging is started at time point at which battery remaining amount become 30%) depending on a hybrid vehicle, for example.

Note that in a case where the parking control ECU 102 permits the engine charging during the parking operation execution period as described above, the engine 310 may be started and/or stopped for charging in a part of the parking operation execution period. However, in terms of controlling discomfort felt by a passenger due to sudden starting or stopping of the engine, it is preferred to continuously perform the engine charging during the parking operation execution period.

Next, when the vehicle 2 reaches the target parking position by the above-described parking operation, a flow according to the present parking method is ended.

As described above, in the parking control device A2, the control unit 32 continuously performs the battery traveling, or the battery traveling and the engine travelling and permits the engine charging during the parking operation execution period to execute parking of the hybrid vehicle 2 in a case where the usable electric energy is lower than the necessary electric energy, and continuously performs the battery traveling without constantly performing the engine travelling and permits the engine charging during the parking operation execution period to execute parking of the hybrid vehicle 2 in a case where the usable electric energy is equal to or higher than the necessary electric energy. Since there is no starting and/or stopping of the engine 310 for the engine travelling during the parking operation execution period of the hybrid vehicle 2, it is possible to improve driving performance in the period.

Note that the present invention is not limited to the configurations of the above-described embodiments and is indicated by claims. It is intended that all changes within the scope of the claims are included.

For example, in the description of a parking method in the above-described embodiments, a parking control device in which electric energy necessary for executing parking of the hybrid vehicle 1 or 2 includes auxiliary device electric energy and electric energy due to a road grade or the like has been described. However, as long as an effect of the present invention is not damaged, a parking control device in which at least one of the auxiliary device electric energy and the electric energy due to a road grade or the like is not included is also within the scope intended by the present invention.

### Reference Signs List

A1, A2 parking control device
1, 2 hybrid vehicle
11 necessary electric energy calculation unit
21 electric energy comparison unit
31, 32 control unit

## Claims

1. A parking control device to control parking of a hybrid vehicle (1) that can execute engine travelling in which an engine (310) as an internal-combustion engine is a driving source, battery traveling in which a motor (410) using a battery (430) is a driving source, and engine charging to perform charging of the battery (430) by the engine (310), the device comprising:
a necessary electric energy calculation unit (11) configured to calculate electric energy necessary for executing the parking of the hybrid vehicle (1 );
an electric energy comparison unit (21) configured to compare the necessary electric energy calculated by the necessary electric energy calculation unit (11) and usable electric energy remaining in the battery (430) before the parking is started; and
a control unit (31) configured to control operation of the engine travelling, the battery traveling, and the engine charging based on the comparison between the necessary electric energy and the usable electric energy by the electric energy comparison unit (21), and
wherein the control unit (31) is configured to continuously perform the battery traveling, or the battery traveling and the engine travelling and configured to permit the engine charging during a parking operation execution period to execute the parking of the hybrid vehicle (1) in a case where the usable electric energy is lower than the necessary electric energy, **characterized in that** the control unit (31) is configured to:
continuously perform the battery traveling without continuously performing the engine travelling, and permit the engine charging during the parking operation execution period to execute the parking of the hybrid vehicle (1) in a case where the usable electric energy is equal to or higher than the necessary electric energy.

2. The parking control device according to claim 1, wherein the electric energy necessary for executing the parking includes auxiliary device electric energy consumed during the parking operation execution period.

3. The parking control device according to claim 1 or claim 2, wherein the electric energy necessary for executing the parking includes what is due to a road grade and/or a road bump in a traveling path where the hybrid vehicle (1) travels during the parking operation execution period.

## Patentansprüche

1. Parksteuerungsvorrichtung zum Steuern des Parkens eines Hybridfahrzeugs (1), das einen Motorfahrbetrieb, bei dem ein Motor (310) als Verbrennungsmotor eine Antriebsquelle ist, einen Batteriefahrbetrieb, bei dem ein Elektromotor (410) unter Verwendung einer Batterie (430) eine Antriebsquelle ist, und einen Motorladebetrieb ausführen kann, um ein Laden der Batterie (430) durch den Motor (310) durchzuführen, wobei die Vorrichtung Folgendes umfasst:
eine Berechnungseinheit (11) für benötigte elektrische Energie, die ausgelegt ist, um elektrische Energie zu berechnen, die zum Ausführen des Parkens des Hybridfahrzeugs (1) nötig ist;
eine Vergleichseinheit (21) für elektrische Energie, die ausgelegt ist, um die benötigte elektrische Energie, die durch die Berechnungseinheit (11) für benötigte elektrische Energie berechnet wurde, und die nutzbare elektrische Energie, die in der Batterie (430) verbleibt, bevor mit dem Parken begonnen wird, vergleicht; und
eine Steuereinheit (31), die ausgelegt ist, um den Betrieb des Motorfahrbetriebs, des Batteriefahrbetriebs und des Motorladebetriebs basierend auf dem Vergleich zwischen der benötigten elektrischen Energie und der nutzbaren elektrischen Energie durch die Vergleichseinheit (21) für elektrische Energie zu steuern und
wobei die Steuereinheit (31) ausgelegt ist, um den Batteriefahrbetrieb oder den Batteriefahrbetrieb und den Motorfahrbetrieb kontinuierlich durchzuführen, und ausgelegt ist, um den Motorladebetrieb während eines Parkvorgangsausführungszeitraums zuzulassen, um das Parken des Hybridfahrzeugs (1) in einem Fall auszuführen, in dem die nutzbare elektrische Energie geringer ist als die benötigte elektrische Energie, **dadurch gekennzeichnet, dass** die Steuereinheit (31) ausgelegt ist, um:
den Batteriefahrbetrieb kontinuierlich durchzuführen, ohne den Motorfahrbetrieb kontinuierlich durchzuführen und zuzulassen, dass der Motorladebetrieb während des Parkvorgangsausführungszeitraums das Parken des Hybridfahrzeugs (1) in einem Fall ausführt, in dem die nutzbare elektrische Energie gleich hoch oder höher ist als die benötigte elektrische Energie.

2. Parksteuerungsvorrichtung nach Anspruch 1, wobei die elektrische Energie, die zum Ausführen des Parkens benötigt wird, elektrische Energie einer Hilfsvorrichtung beinhaltet, die während des Parkvorgangsausführungszeitraums verbraucht wird.

3. Parksteuerungsvorrichtung nach Anspruch 1 oder Anspruch 2, wobei die elektrische Energie, die zum Ausführen des Parkens benötigt wird, benhaltet, was aufgrund eines Straßenzustands und/oder Straßenunebenheiten in einem Fahrtweg benötigt wird, auf dem sich das Hybridfahrzeug (1) während des Parkvorgangsausführungszeitraums bewegt.

## Revendications

1. Dispositif de commande de stationnement pour commander le stationnement d'un véhicule hybride (1) qui peut exécuter un déplacement par moteur dans lequel un moteur (310) sous la forme d'un moteur à combustion interne est une source d'entraînement, un déplacement par batterie dans lequel un moteur électrique (410) utilisant une batterie (430) est une source d'entraînement, et une charge du moteur pour effectuer une charge de la batterie (430) par l'intermédiaire du moteur (310), le dispositif comprenant :
une unité de calcul d'énergie électrique nécessaire (11) configurée pour calculer l'énergie électrique nécessaire pour exécuter le stationnement du véhicule hybride (1) ;
une unité de comparaison d'énergie électrique (21) configurée pour comparer l'énergie électrique nécessaire calculée par l'unité de calcul d'énergie électrique nécessaire (11) et l'énergie électrique utilisable restant dans la batterie (430) avant le démarrage du stationnement ; et
une unité de commande (31) configurée pour commander l'opération de déplacement par moteur, de déplacement par batterie et de charge du moteur sur la base de la comparaison entre l'énergie électrique nécessaire et l'énergie électrique utilisable par l'unité de comparaison d'énergie électrique (21), et
dans lequel l'unité de commande (31) est configurée pour effectuer en continu le déplacement par batterie, ou le déplacement par batterie et le déplacement par moteur et est configurée pour permettre la charge de moteur pendant une période d'exécution d'opération de stationnement pour exécuter le stationnement du véhicule hybride (1) dans un cas où l'énergie électrique utilisable est inférieure à l'énergie électrique nécessaire, **caractérisé en ce que** l'unité de commande (31) est configurée pour :
exécuter en continu le déplacement par batterie sans exécuter en continu le déplacement par moteur, et permettre la charge de moteur pendant la période d'exécution d'opération de stationnement pour exécuter le stationnement du véhicule hybride (1) dans un cas où l'énergie électrique utilisable est égale ou supérieure à l'énergie électrique nécessaire.

2. Dispositif de commande de stationnement selon la revendication 1, dans lequel l'énergie électrique nécessaire pour exécuter le stationnement comprend l'énergie électrique de dispositif auxiliaire consommée pendant la période d'exécution d'opération de stationnement.

3. Dispositif de commande de stationnement selon la revendication 1 ou la revendication 2, dans lequel l'énergie électrique nécessaire pour exécuter le stationnement inclut ce qui est dû à une pente de la route et/ou un obstacle sur la route dans un trajet de déplacement où le véhicule hybride (1) se déplace pendant la période d'exécution d'opération de stationnement.
